# EUROPEAN PATENT APPLICATION

(11) **EP 1 731 326 A1**
(43) Date of publication of application: **13.12.2006**
(21) Application number: 05105106.8
(22) Date of filing: 10.06.2005
(51) Int. Cl.: B42D 15/10

(54) **Multilayer information page**

(71) Applicant: Setec Oy, 01740 Vantaa (FI)
(72) Inventor: Syrjänen, Taru, 01400, Vantaa (FI)
(74) Representative: Holmström, Stefan Mikael

(57) **Abstract**

The present invention relates to a multilayer information page (1) for a security document, which includes an information part (3) allowing at least some information to be entered into the information page, a flexible and bending resistant connecting part (2) for connecting the information page to the security document, and a surface film (7) which at least partly covers the information part (3) and the connecting part (2) and which is fastened to the information page (1) by lamination. In order to make a possible attempt at forgery even easier to detect, a surface of the connecting part (2) is provided with a predetermined pattern by means of printing ink (8), and a detachment layer (9) consisting of separately residing areas is arranged between the printing ink (8) and the surface film (7) so as to prevent the surface film (7) from fastening firmly to the printing ink (8) provided on the surface of the connecting part (2).

## Description

### FIELD OF THE INVENTION

The present invention relates to a multilayer information page for a security document, such a passport, and particularly to a solution whereby such an information page is left with visible marks if an attempt at deconstructing its multilayer structure has been made.

### DESCRIPTION OF THE PRIOR ART

Properties to be required from an information page of a security document are partly contradictory. First, the structure of an information part of the information page, whereto information of the information page has been entered, should make it impossible for a forger to disassemble the information part. A further requirement is that at least some of the information to be provided on the information page can be entered thereto by utilizing laser engraving. In order to achieve these goals, in practice the information part has to be manufactured of a material whose bending properties and bending resistance are poor.

However, an information page should have good bending properties as well as good bending resistance. Consequently, it is necessary to fasten a flexible and bending durable connecting part to the information part so as to enable the information page to be connected to the security document. In order to achieve a sufficient security level, the information part of the information page is to be connected to the connecting part in a manner not allowing these parts to be detached from one another without leaving visible marks to reveal this.

### SUMMARY OF THE INVENTION

An object of the present invention is to provide a solution which makes it even more difficult to detach an information part and a connecting part for an information page from one another without leaving visible marks to reveal this. This object is achieved by a method in accordance with the attached independent claim 1 as well as by an information page in accordance with the attached independent claim 2.

The invention includes forming, by means of printing ink, a predetermined pattern into the surface of a connecting part so as to enable an attempt at detaching an information part from the connecting part to be detected due to irregular breakage of the predetermined pattern. In the present application, a printing ink refers to any colourant or paint which in industrial mass production can be spread in a controlled manner onto a surface of the connecting part so as to produce a desired pattern.

In order to ensure irregular breakage of the printing ink, a detachment layer consisting of separately residing areas is arranged between the printing ink and a surface film of the information page. These areas prevent the surface film from sticking firmly to the pattern formed by printing ink. On the other hand, at points where no areas of the detachment layer exist, the surface film sticks firmly to the printing ink. When an attempt is then made to detach the surface film from the information page, the areas of the detachment layer cause the predetermined pattern formed in the connecting part to break irregularly in a manner which produces a permanent mark. The detachment of the information part of the information page and replacement thereof by another information part are thus detectable due to this irregular breakage. Similarly, disassembling the information page so as to change the information entered into the information part leaves visible marks.

Preferred embodiments of the information page in accordance with the invention are disclosed in the attached dependent claims 2 to 5.

### BRIEF DESCRIPTION OF THE DRAWINGS

In the following, the invention will be described in closer detail by way of example and with reference to the accompanying drawings, in which

Figure 1 shows an information page connected to a security document, and

Figure 2 illustrates a first preferred embodiment of an information page according to the invention.

### DESCRIPTION OF SOME EMBODIMENTS

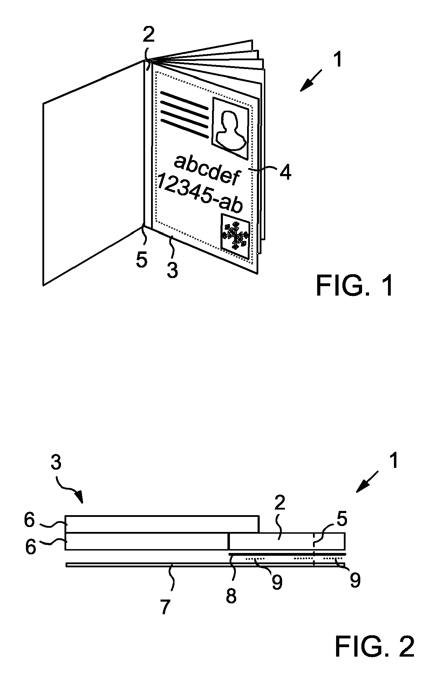

Figure 1 shows an information page 1 according to the invention connected to a security document. In the example of Figure 1, the security document is a passport whereto the information page 1 has been fastened by means of its connecting part 2. The information page 1 can be fastened to the security document e.g. by means of a stitch 5, i.e. in the same manner as other pages included in the security document.

Information, such as the name, date of birth, photograph, et cetera of the owner of the passport, has been entered into an information area 4 in an information part 3 of the information page.

Figure 2 illustrates a structure of an information page according to the invention and a method of manufacturing the same. In the case of Figure 2, the information page has been turned such that the surface of the information page, wherefrom the information can be read, has been turned downwards.

In the case of Figure 2, polycarbonate films 6 forming the information part as well as the connecting part 2 are with respect to one another set in a position in which they will reside in a finished information page. The surface of the connecting part 2 is provided with a predetermined pattern by means of printing ink 8. The printing ink may be e.g. a UV drying offset printing ink, which enables a desired pattern to be formed e.g. by a printing machine or a printer.

The surface of the printing ink 8, in turn, is provided with a detachment layer 9, which is formed by separately residing areas. The material of the detachment layer may be e.g. a non-tacky offset varnish suitable for being spread e.g. by a printing machine. Finally, a clear surface film 7, which may be manufactured e.g. of polyester (PET), is arranged on the surface of the information page 1.

In the case of Figure 2 it is by way of example assumed that the surface film covers the entire information page. When the surface film 7 of the information page 1 is fixed in its place by lamination, it thus sticks to the film 6 of the information part as well as to the connecting part 2 by means of the printing ink 8. The detachment layer 9, however, is made of a material which prevents the surface layer 7 from sticking firmly to the printing ink 8 provided on the surface of the detachment part.

If a forger makes an attempt at disassembling the information page 1 shown in Figure 2 by removing the surface film 7, this results in irregular breakage of the predetermined pattern formed by means of printing ink 8. At points where areas of the detachment layer 9 exist, the pattern remains intact since at these points the detachment layer has prevented the surface film from sticking firmly to the printing ink 8. On the other hand, at points where no areas of the detachment layer 9 exist, the pattern is broken since at these points it has stuck to the surface film 7.

Such irregular breakage involves an advantage that it becomes impossible to forge an information page by replacing the original information part by another one by utilizing the connecting part 2 without this manoeuvre being detected visually due to the irregularly broken pattern. Similarly, any attempt at detaching the surface film so as to enable the information entered into the information part to be changed leaves visible marks.

In order to make detection of attempts at forgery even more efficient, it is preferable to arrange the areas of the detachment layer irregularly or even randomly. The areas of the detachment layer may be formed e.g. by spheres having a diameter of 2 to 4 mm or by certain letters, e.g. "FIN".

It is to be understood that the above description and the related figures are only intended to illustrate the present invention. It will be obvious to one skilled in the art that the invention can be varied and modified in several ways without deviating from the scope of the invention.

## Claims

1. A method of manufacturing a multilayer information page (1) for a security document, the information page including at least an information part (3) and a connecting part (2), **characterized in that** the method comprises:
forming a predetermined pattern onto a surface of the connecting part (2) by means of printing ink (8),
arranging onto a surface of the predetermined pattern a detachment layer (9) consisting of separately residing areas, and
laminating onto a surface of the information page (1) a surface film (7) which at least partly covers the information part (3) and which covers at least the predetermined pattern formed onto the surface of the connecting part by means of printing ink (8).

2. A multilayer information page (1) for a security document, including:
an information part (3) allowing at least some information to be entered into the information page,
a flexible and bending resistant connecting part (2) for connecting the information page to the security document, and
a surface film (7) which at least partly covers the information part (3) and the connecting part (2) and which is fastened to the information page (1) by lamination, **characterized in that**
a surface of the connecting part (2) is provided with a predetermined pattern by means of printing ink (8), and
a detachment layer (9) consisting of separately residing areas is arranged between the printing ink (8) and the surface film (7) so as to prevent the surface film (7) from fastening firmly to the printing ink (8) provided on the surface of the connecting part (2).

3. An information page as claimed in claim 2, **characterized in that** the separately residing areas of the detachment layer (9) are arranged irregularly with respect to one another.

4. An information page as claimed in claim 2, **characterized in that** the information part (3) is manufactured of polycarbonate, and that the surface film (7) is manufactured of clear polyester.

5. An information page as claimed in any one of claims 2 to 4, **characterized in that** the printing ink (8) is a UV drying offset printing ink, and that the detachment layer (9) is made of a varnish.
